# EUROPEAN PATENT APPLICATION

(11) **EP 2 913 574 A1**
(43) Date of publication of application: **02.09.2015**
(21) Application number: 15156646.0
(22) Date of filing: 26.02.2015
(51) Int. Cl.: F16L 3/10

(54) **Conduit mounting device**

(30) Priority: 26.02.2014 GB 201403372
(71) Applicant: Electrix International Limited, Bishop Auckland, County Durham DL14 6XP (GB)
(72) Inventor: The designation of the inventor has not yet been filed
(74) Representative: Archer, Graham John

(57) **Abstract**

A device (50) for mounting an elongate member (52), such as a pipe or section of conduit, relative to a surface (54) is provided. The device (50) includes a mounting portion (56, 58) for fixing the device (50) in place and a first body portion (66) connected thereto. There is a second body portion (68) that attaches to the first body portion (66) and together they encircle the elongate member (52). The first and second body portions (66, 68) have respective retaining portions (72, 74) that mutually engage each other by a sliding motion that is parallel to an axis of the elongate member (52). Once engaged they are only able to move in this direction parallel to the conduit axis and in particular cannot move perpendicular to the axis. A locking member (85, 90) is then used to prevent this sliding movement thereby locking the device (50) in place.

## Description

The present invention relates to a device for mounting an elongate member adjacent a surface, and relates particularly, but not exclusively, to a device for supporting a length of conduit in clean environments.

The use of supporting brackets to mount lengths of conduit or pipe are well known and are referred to by a variety of names including "pipe support", "Munson ring" or "saddle". Such devices are used to fix a length of conduit, pipe or another elongate member relative to the surface.

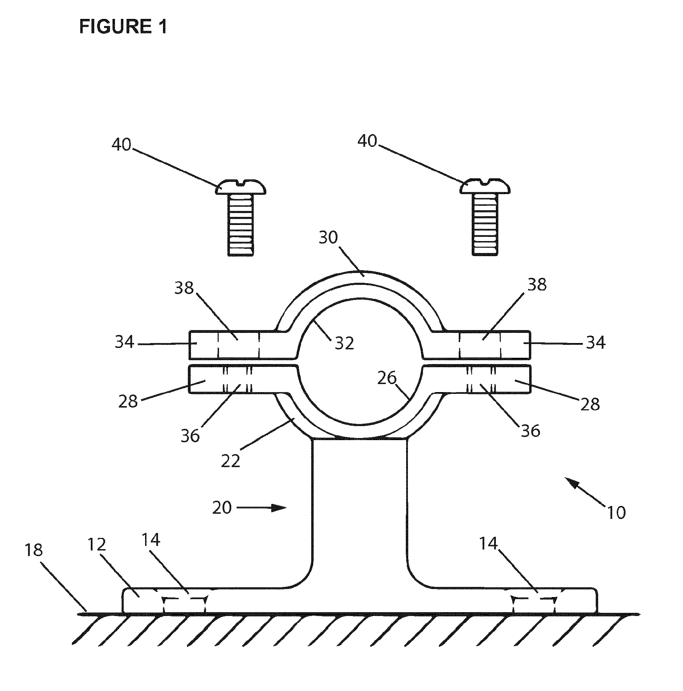

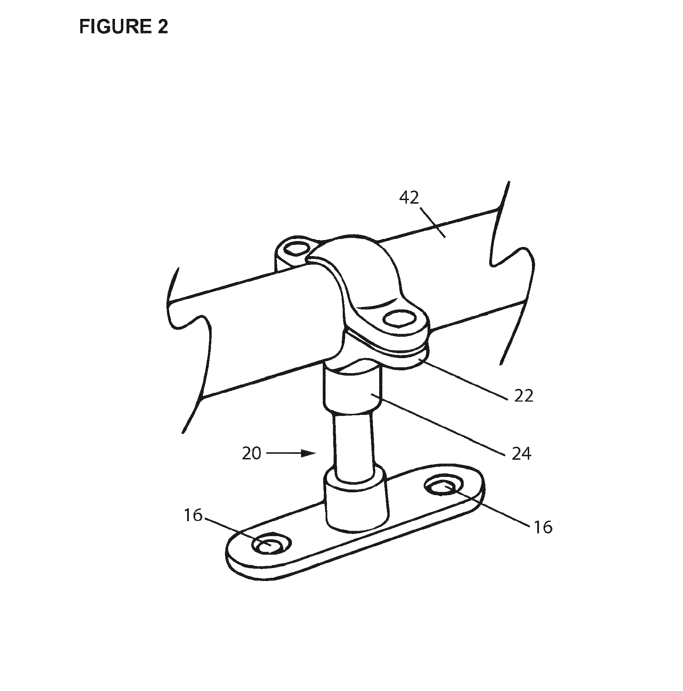

Examples of these devices are shown in figures 1 and 2 as follows. The conduit device support 10 has a mounting plate 12 with a pair of holes 14 through which extend fixing screws 16 that are used to mount the device to a mounting surface 18. A support arm 20 extends from the mounting plate 12 to a first saddle portion 22. In the embodiment shown in figure 1 the support arm 20 is formed integrally with the mounting plate 12, whereas, in figure 2 the mounting plate 12 and first saddle portion 22 are separate components and have threaded recesses formed therein which receive a bar 24 that has threaded portions at either end.

The first saddle portion 22 has a semi-circular internal surface 26 and a pair of flanges 28. A second saddle portion 30 also has an internal semi-circular surface 32 and flanges 34. The flanges 28 on first saddle portion 22 have threaded apertures 36 and the flanges 34 on the second saddle portion 30 have non-threaded apertures 38. A pair of bolts 40 extend through the apertures 38 and into threaded apertures 36 and are used to clamp the first and second saddle portions 22 and 30 together thereby retaining the conduit section 42 in engagement with semi-circular surfaces 26 and 32 and holding conduit 42 in place.

Such mounting devices are adequate in many situations. However, where the conduit and support are being used in a "clean" environment such as is required in the food, beverage and pharmaceutical manufacturing industries, these devices have the disadvantage that they create a number of dirt traps. As a result, these devices can increase the time required to ensure that they are cleaned to the high hygiene standards required in these environments. In an alternative version of the prior art, the flanges on one side of the device replaced with a hinge. However, this does not resolve the problem of dirt traps since the hinge itself creates a non-continuous surface with crevasses which can allow dirt to accumulate.

Preferred embodiments of the present invention seek to overcome the above described disadvantages of the prior art.

According to an aspect of the present invention there is provided a device for mounting an elongate member relative to a surface, the device comprising:-
at least one mounting portion for fixing the device to a surface;
at least one first body portion for connection to said mounting portion;
at least one second body portion for engaging said first body portion and with said first body portion thereby encircling the elongate member, wherein said first body portion has at least one first retaining portion and said second body portion has at least one second retaining portion, the first and second retaining portions being adapted to mutually engage each other and to allow movement between a first condition in which said first and second retaining portions are able to separate by moving in a direction not parallel to an axis of a portion of the elongate member encircled by said body portions and a second condition in which said first and second retaining portions are prevented from moving in a direction other than parallel to said axis; and
locking means for preventing said second body portion moving parallel to said axis when in said second condition.

By providing the mounting portions that are able to slide together and then be held together by the locking means, the advantage is provided that many of the dirt traps present in the devices of the prior art are eliminated. Specifically, at least one of the fixing bolts in the version of the prior art shown in figures 1 and 2 has been removed and similarly the hinge from that version of the prior art has also been removed. It is also easier to form a continuous substantially annular external surface. This not only reduces the opportunity for dirt accumulation but also makes the surface easier to clean.

The first and second retaining portions may comprise a recess channel having a substantially uniform first cross-section and the other of said first and second retaining portions comprises a protrusion having a substantially uniform second cross-section corresponding to said first cross-section, said recess channel and said protrusion being sized so that they are able to slide relative to each other and shaped to prevent said first and second retaining portions from moving in a direction other than parallel to said axis.

By using a recess channel and a protrusion having matching cross sections the advantage is provided that the components of the device of the present invention are simple to manufacture using straightforward machining techniques. Furthermore, the assembly of the device is also straightforward which assists in ensuring that consistent assembly of the device takes place.

In a preferred embodiment the first and second cross-sections are trapezoidal.

By forming the protrusion and recess having a uniform trapezoidal cross-section, the advantage is provided that the junction between the first and second body portions is very strong. In particular, the connection between the two body portions is similar to that of the so-called dovetail joint.

In another preferred embodiment the recess channel and said protrusion extend partially along said first and second retaining portions thereby forming respective abutment surfaces limiting the sliding movement of said protrusion within said recess channel.

By forming an abutment portion at one end of the channel, the advantage is provided that the installation of the device is straightforward as the movement of one body portion relative to the other is limited. As a result the installer can easily determine that the body portions are correctly aligned. Furthermore, the visible junction between the body portions at the abutment end is a simple straight line, whereas, at the other end it is a longer line tracing out the shape of the trapezium forming the cross-section of the channel and protrusion. This further reduces the opportunity for dirt accumulation.

In a preferred embodiment:-
one of said first and second retaining portions comprises a key portion having a narrow portion connected to one of said first and second body portion and a wide portion connected to said narrow portion; and
other of said first and second retaining portion comprises a slot including a first slot portion sized to receive said wide portion and said narrow portion and to allow said key portion to pass into and out of said slot in a direction not parallel to said axis and a second slot portion, in communication with said first slot portion, and sized to receive wide portion and said narrow portion and to prevent said keep portion from passing into and out of said slot in a direction not parallel to said axis.

By having a key portion with a wide portion and a narrow portion and having a slot with first and second slot portions and allowing the key to slide within the slot after entering into the first slot portion and then being retained within the second slot portion preventing non-axial movement, the advantage is provided that the retaining portions are completely hidden from sight thereby eliminating them as potential dirt traps. As a result, an almost completely smooth surface is presented on the junction between the first and second body portions.

The locking means may comprise a threaded member adapted to engage a threaded aperture in one of said first and second body portions, wherein in use said threaded member extends through said threaded aperture and engages the elongate member thereby preventing said one of said first and second body portions from moving in a direction parallel to said axis.

By using a simple locking bolt extending through the second body portion and engaging the elongate member, the advantage is provided that the manufacture of this component is extremely simple by the simple addition of the threaded hole into the second body portion.

Alternatively, the locking means may comprise a threaded member adapted to engage a first threaded aperture in said first body portion and a second threaded aperture in said second body portion, wherein in use said threaded member extends through one of said first and second threaded apertures and into the other of said first and second threaded apertures thereby fixing said first and second body portions together.

By using an aperture in each of the first and second body portions, the advantage is provided that the in order for the two portions to lock together. This ensures correct installation of the device.

Preferred embodiments of the present invention will now be described, by way of example only, and not in any limitative sense, with reference to the accompanying drawings in which:-
Figure 1 is an end view of a pipe support of the prior art;
Figure 2 is a perspective view of another pipe support of the prior art;
Figure 3 is an end view of a device of the present invention;
Figure 4 is a perspective view of the device of figure 3;
Figures 5a to 5f are end views of alternative portions of devices of the present invention;
Figure 6 is an end view of a device of another embodiment of the present invention;
Figure 7 is a perspective view of a device of a further embodiment of the present invention;
Figure 8 is a plan view of a portion of the device of figure 7; and
Figures 9a, 9b and 9c are sectional views along the lines A-A, B-B and C-C in figure 8 respectively and figure 9d is a sectional view of another portion of the device of figure 7.

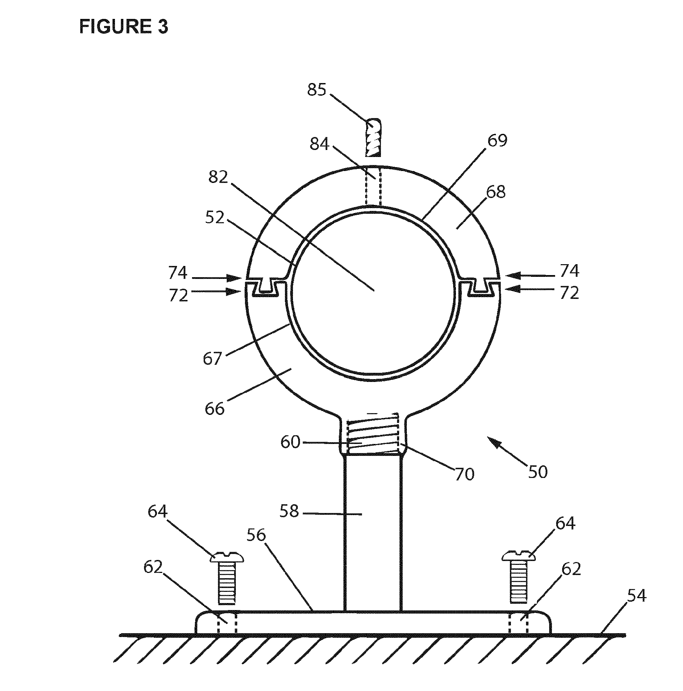

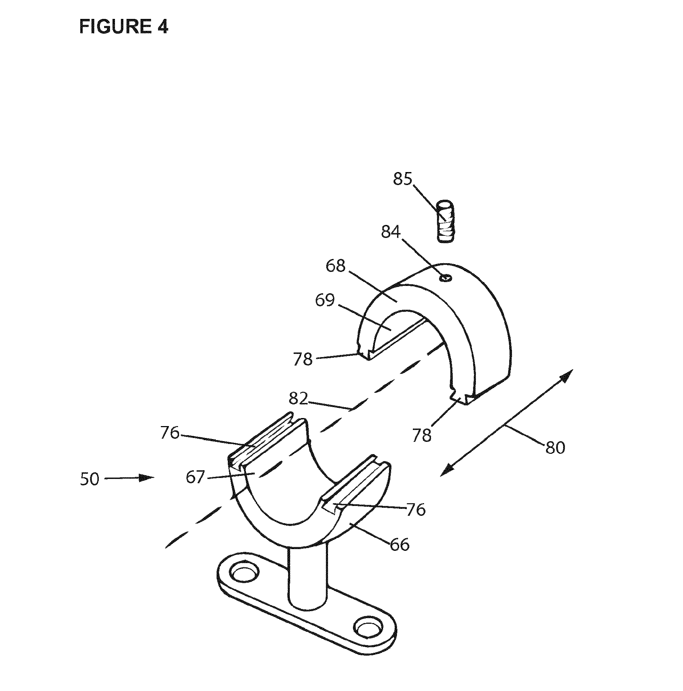

Referring to figures 3 and 4, a device 50 is provided for mounting an elongate member, in the form of conduit section 52, relative to a surface 54. The device 50 has a mounting plate 56 and a stem 58 that together form a mounting portion and are formed as a single component. The stem 58 has an externally threaded end portion 60 and the mounting plate has a pair of apertures 62 that receive the fixing screws 64 which extend through surface 54 and mount the device 50 thereto.

The device 50 has first and second body portions 66 and 68 with the first body portion being attached to stem 58 via an internally threaded recess 70 that engages threaded end portion 60. The first and second body portions 66 and 68 have semi-circular internal surfaces 67 and 69. The first and second body portions engage each other via respective first and second retaining portions 72 and 74 and thereby encircle the conduit section 52. In the example shown in figure 3 the conduit portion 52 is shown schematically as though it did not engage the internal surfaces 67 and 69 of the first and second body portions 66 and 68. However, in reality the first and second body portion 66 and 68 are preferably engaging all around the conduit section 52 without leaving a gap into which dirt can become trapped.

The first retaining portion 72 is in the form of a recess channel 76 having a trapezoidal cross-section that is substantially uniform along the length of the channel. The second retaining portions 74 is in the form of an elongate protrusion 78 that is substantially uniform along its length and as a trapezoidal cross-section corresponding to the cross-section of channel 76. That is, the cross-section of protrusion 78 is shaped and sized so as to slide within and fit closely within channel 76. As a result of the close fit of the trapezoidal channel 76 and protrusion 78, the second body portion 68 is able to slide in a direction indicated by the arrow 80 parallel with an axis 82 that is the axis of the portion of conduit 52 that the device 50 is engaging.

In order to fix the second body portion 68 in position, fixing means in the form of a threaded aperture 84 is provided extending through second body portion 68. Into the threaded aperture 84 a grub screw 85 is located and the threaded aperture allows the grub screw to be tightened into engagement with the conduit section 52 thereby preventing the second body portion 68 from sliding thereby locking the device together.

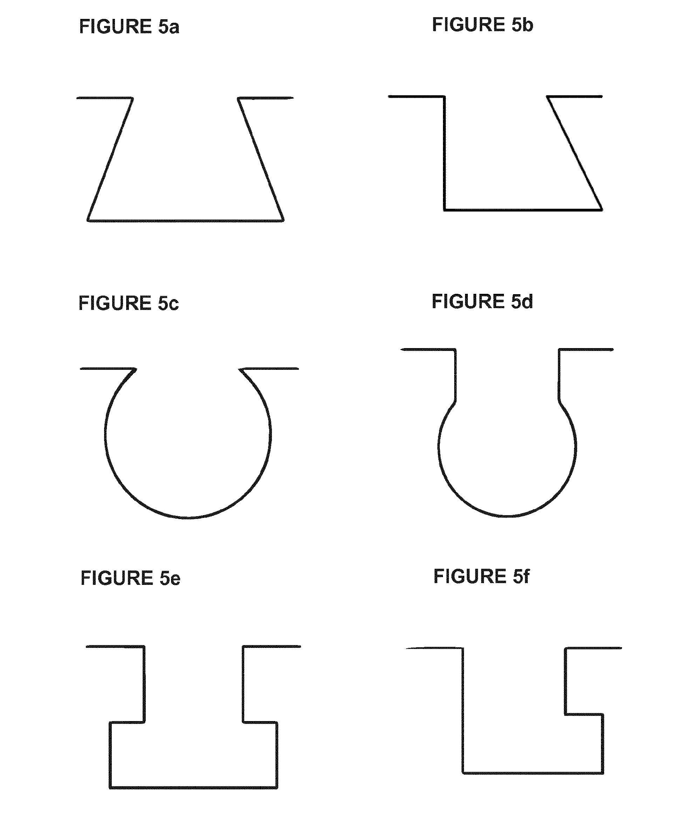

Figures 5a to 5f show a series of examples of the cross-section is that can be used to form channel 76 and protrusion 78. In figure 5a the cross-section shown is trapezoidal as previously described. In figure 5b the cross-section is similar to that shown in figure 5a except that one side is perpendicular to the end surface. In figures 5c and 5d two variations of a channel or protrusion including a circular portion are shown. Figures 5e and 5f show T-shaped and L-shaped cross-sections respectively.

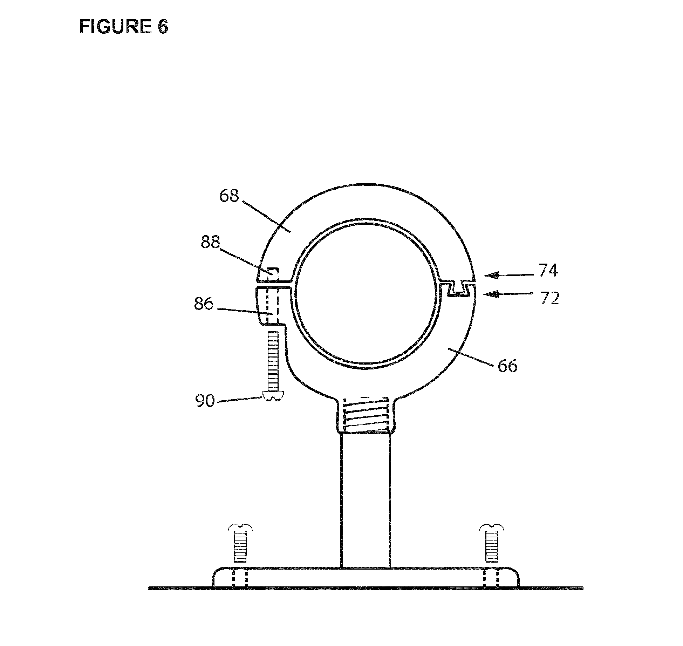

Referring to figure 6, an alternative embodiment, that is a variation on that previously described, is shown. In this embodiment the majority of the features remain the same except that a single channel 76 and protrusion 78 are shown for connecting the first and second body portion 66 and 68. The channel 76 and protrusion 78 that have been removed are placed by planar engaging surfaces, a non-threaded aperture 86 extending through the first body portion 66 and a threaded recess 88 extending into second body portion 68. A bolt 90 extends through aperture 86 and engages the thread in recess 88. As a result, these components act both as the locking means, preventing the second body portion from moving in a direction parallel to axis 82 relative to the first body portion and prevent any other movement of the second body portion relative to the first body portion.

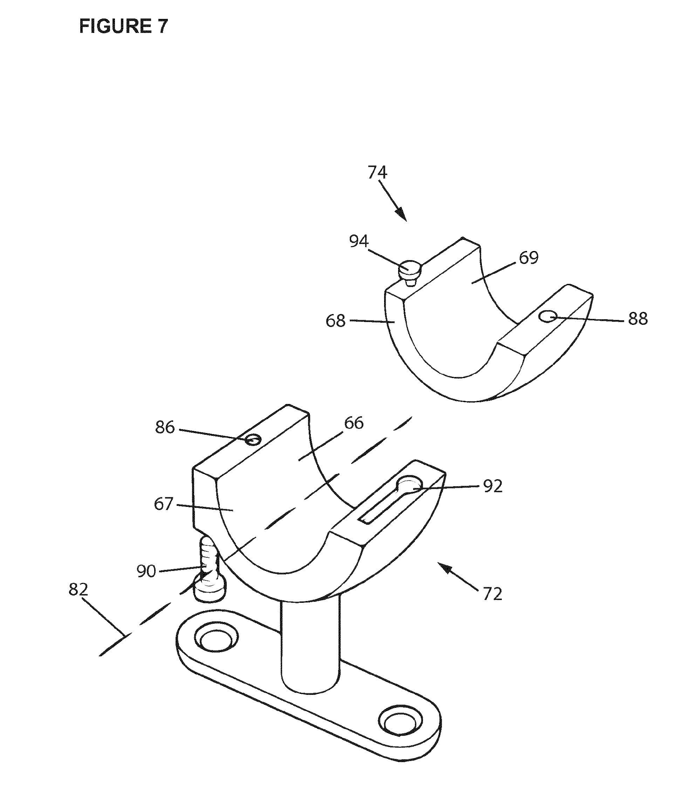

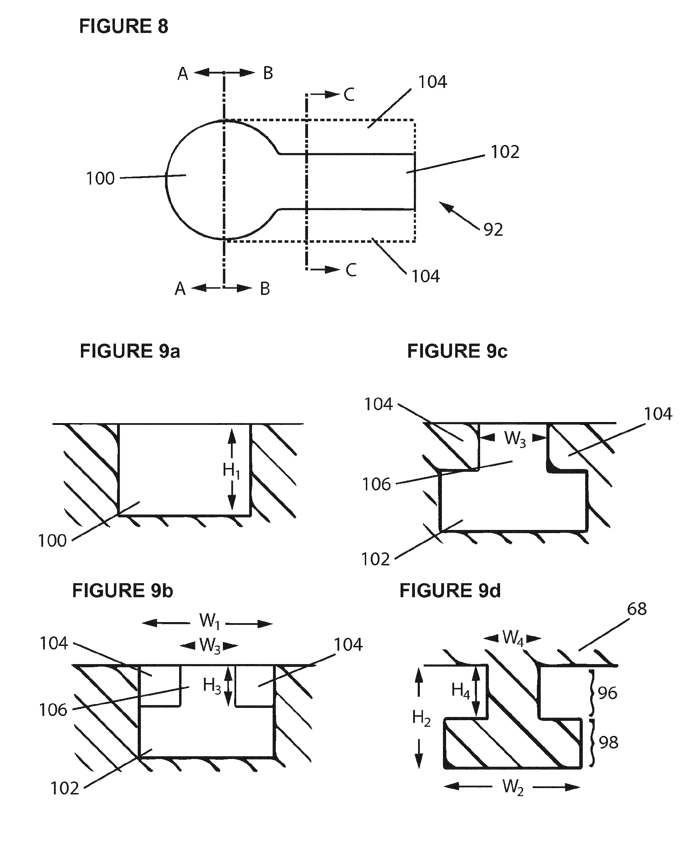

A further alternative embodiment is shown in figure 7 and this embodiment is very similar to that shown in figure 6 utilising the aperture 86, threaded recess 88 and bolt 90. However, the first and second retention portions 72 and 74 are in the form of a slot 92 and a key 94. With additional reference to figure 9d, the key 94 has a narrow portion 96 that is connected to the second body portion 68 and a wide portion 98 that is connected to the narrow portion 96. The narrow and wide portions 96 and 98 form a T-shaped cross-section, which is shown in figure 9d as a sectional view through the key 94 at its junction with the second body portion 68. The key 94 may be formed integrally with the second body portion 86 by machining it from the same component. Alternatively, the key 94 may be a bolt-like component that is fixed to the second body portion 86 by insertion of a threaded end into a threaded recess formed in the second body portion.

The slot 92 has a keyhole shaped appearance when viewed externally but has a more complicated shape, as can be seen from the sectional views in figures 9a, 9b and 9c. The slot 92 has a first slot portion 100 that is substantially circular and is sized to receive the whole of the key 94. That is, the first slot portion 100 has a height H₁ that is slightly larger than the height H₂ of the key 94 and a width W₁ that is slightly larger than the width W₂ of the key. As a result, the key 94 is able to pass in and out of the first slot portion 100.

The slot 92 has a second slot portion 102 that is in communication with the first slot portion 100 thereby forming part of the same slot. The second slot portion is sized to receive both the wide and the narrow portions of the key 94 allowing the key to pass along the second slot portion 102 in a direction parallel to the axis 82. A cross-section of the second slot portion 102 is shown in figure 9c from which it can be seen that the cross-section is T-shaped and sized to match the cross-section of the key 94 (figure 9d). The T-shaped of second slot portion 102 is formed by a pair of flanges 104 that run along the length of the second slot portion 102. The flanges 104 create a gap 106 that has a width W₃ that is less than the width W₁ and substantially the same but slightly more than the width W₄ of the narrow portion 96 of key 94. Similarly the height of the flanges 104, indicated at H₃ is substantially the same but slightly less than the height H₄ of narrow portion 96 of key 94.

As result, key 94 can enter the slot 92 through first slot portion 100 thereby moving in a direction that is transverse and in particular perpendicular to axis 82. The key 94 can then slide along the slot 92, in a direction parallel to axis 82, entering the second slot portion. Whilst the key 94 is within the second slot portion 102 it is unable to move in any direction other than a direction parallel to axis 82 and in particular cannot move perpendicular to the axis.

Operation of the device of the present invention will now be described, initially with reference to figures 3 to 5. The device 50 is provided in two main parts with the mounting plate 56, stem 58 and first body portion 66 provided a single component and the second body portion 68 with the grub screw 85 as the other component. The mounting plate 56 is fixed to surface 54 using screws 64 and the section of conduit 52 is engaged with the first body portion 66 contacting the internal surface 67. The second body portion 68 is also brought into engagement with the conduit section 52 so that the internal surface 69 engages the conduit. The second body portion 68 is positioned so that the protrusions 78 on one side of the second body portion are lined up with and just engaging the opposing ends of the recess channels 76 on the first body portion. The second body portion is slid along the conduit 52 so that the protrusions 78 slide within the recess channels 76 until the first and second body portions are aligned. The engagement of the protrusions 78 within recess channel 76 prevents the second body portion 86 from moving in any direction other than in the direction 80 parallel to axis 82. When the alignment is correct the grub screw 85 is tightened within the threaded aperture 84 so that the grub screw engages and locks onto the outer surface of conduit 52. As a result, the second body portion 68 is unable to slide in the direction 80 parallel to axis 82 and the device 50 is locked in position mounting the conduit section 52 relative to the surface 54.

With reference to figure 6, the operation of the device shown therein is the same as that for the device in figures 3 and 4 except that the protrusions 78 and recess 76 are only present on one side. Furthermore, the aperture 84 and grub screw 85 have been removed and replaced by the aperture 86, threaded recess 88 and bolt 90. Once the first and second body portion 66 and 68 are aligned, as described above, the bolt 90 is inserted through aperture 86 and tightened into threaded recess 88 thereby preventing any movement of the first body portion 66 relative to the second body portion 68.

With reference to figures 7, the operation of the device shown therein will now be described. With the conduit section 52 and engaging the internal surface 67 of first body portion 66, the second body portion 68, as shown in figure 7, is rotated through 180° so that the key 94 is adjacent the slot 92. The first and second body portions are arranged so that the key 94 is aligned with the first slot portion 100 and the body portions are brought together so that the key 94 enters the first slot portion 100. The second body portion 68 is then moved in a direction parallel to axis 82 so that the key 94 enters the second slot portion 102. Once the key 94 is in the second slot portion 102 the flanges 104 fill the space adjacent the narrow portion 96 between the wide portion 98 and the second body portion 68. Because the height of this space (H4) is only slightly larger than the height of the flanges (H3), the second body portion 68 is prevented from moving in a direction transverse to, and in particular perpendicular to, the axis 82. The slot 92 is preferably sized so that when the key 94 reaches the end of the second slot portion 102 that is furthest away from the first slot portion 100 the first and second body portion 66 and 68 are correctly aligned. The bolt 90 is then inserted through the aperture 86 and tightened into threaded recess 88 thereby preventing any movement of the first body portion 66 relative to the second body portion 68.

It will be appreciated by persons skilled in the art that the above embodiments have been described by way of example only and not in any limitative sense, and that various alterations and modification are possible without departure from the scope of protection which is define by the appended claims. For example, in the embodiment shown in figures 3 to 6, the channel 76 and protrusion 78 may be provided only partially along the length of the first and second body portion 66 and 68 so as to provide abutment surfaces. These abutment surfaces limit the sliding movement of the second body portion 68 relative to the first body portion 66 in the direction 80 that is parallel to the axis 82. This ensures that when these surfaces abut one another that the first and second body portions 66 and 68 are correctly aligned. This makes the process of installation easier by allowing the installer to push the second body portion 68 into abutment with the first body portion 66 and then tighten the grub screw 85. Furthermore, the screw 90, shown, in the embodiments in figures 6 and 7, could be arranged in a different orientation, for example, it could be arranged so that the aperture 86 and recess 88 are at a different angle than that shown in these figures or that the aperture 86 is in the second body portion 68 and the recess 88 is in the first body portion 66. It will be apparent to persons skilled in the art that the device of the present invention can be used for mounting other elongate members than the conduit section described above. For example, the device can be used for mounting pipes and tubes and for mounting other elongate members such as cables. It should also be noted that the device can be adapted to operate with elongate members having other cross-sectional shapes than the circular cross-section shown in the embodiments set out above by altering the shape of the first and second body portion 66 and 68.

## Claims

1. A device for mounting an elongate member relative to a surface, the device comprising:-
at least one mounting portion for fixing the device to a surface;
at least one first body portion for connection to said mounting portion;
at least one second body portion for engaging said first body portion and with said first body portion thereby encircling the elongate member, wherein said first body portion has at least one first retaining portion and said second body portion has at least one second retaining portion, the first and second retaining portions being adapted to mutually engage each other and to move between a first condition in which said first and second retaining portions are able to separate by moving in a direction not parallel to an axis of a portion of the elongate member encircled by said body portions and a second condition in which said first and second retaining portions are prevented from moving in a direction other than parallel to said axis; and
locking means for preventing said second body portion moving parallel to said axis when in said second condition.

2. A device according to claim 1, wherein one of said first and second retaining portions comprises a recess channel having a substantially uniform first cross-section and the other of said first and second retaining portions comprises a protrusion having a substantially uniform second cross-section corresponding to said first cross-section, said recess channel and said protrusion being sized so that they are able to slide relative to each other and shaped to prevent said first and second retaining portions from moving in a direction other than parallel to said axis.

3. A device according to claim 2, wherein said first and second cross-sections are trapezoidal.

4. A device according to any of the preceding claims, wherein said recess channel and said protrusion extend partially along said first and second retaining portions thereby forming respective abutment surfaces limiting the sliding movement of said protrusion within said recess channel.

5. A device according to claim 1, wherein:-
one of said first and second retaining portions comprises a key portion having a narrow portion connected to one of said first and second body portion and a wide portion connected to said narrow portion; and
other of said first and second retaining portion comprises a slot including a first slot portion sized to receive said wide portion and said narrow portion and to allow said key portion to pass into and out of said slot in a direction not parallel to said axis and a second slot portion, in communication with said first slot portion, and sized to receive wide portion and said narrow portion and to prevent said keep portion from passing into and out of said slot in a direction not parallel to said axis.

6. A device according to any of the preceding claims, wherein said locking means comprises a threaded member adapted to engage a threaded aperture in one of said first and second body portions, wherein in use said threaded member extends through said threaded aperture and engages the elongate member thereby preventing said one of said first and second body portions from moving in a direction parallel to said axis.

7. A device according to any of claims 1 to 5, wherein said locking means comprises a threaded member adapted to engage a first threaded aperture in said first body portion and a second threaded aperture in said second body portion, wherein in use said threaded member extends through one of said first and second threaded apertures and into the other of said first and second threaded apertures thereby fixing said first and second body portions together.
